# EUROPÄISCHE PATENTANMELDUNG

(11) **EP 0 584 392 A1**
(43) Veröffentlichungstag der Anmeldung: **02.03.1994**
(21) Anmeldenummer: 92114701.3
(22) Anmeldetag: 28.08.1992
(51) Int. Cl.: G06F 3/033

(54) **Statusanzeige**

(71) Anmelder: Cohausz, Helge B., D-40237 Düsseldorf (DE)
(72) Erfinder: Cohausz, Helge B., D-40237 Düsseldorf (DE)
(74) Vertreter: COHAUSZ HASE DAWIDOWICZ & PARTNER

(57) **Zusammenfassung**

Die Erfindung betrift eine Statusanzeige für ein Computerprogramm mit einem länglichen Feld 1, auf dem ein Anzeigefeld 4 oder Zeiger wandert, dessen jeweilige Stellung auf dem länglichen Feld 1 den Status angibt, wobei das längliche Feld 1 aus mehreren aneinander angrenzenden Einzelfeldern 2 zusammengesetzt ist. Diese bilden jeweils ein Bedienfeld oder einen Bedienknopf, bei dessen Betätigung in den dazugehörigen Programmbereich verzweigt oder die dazugehörige Programmfunktion ausgeführt wird und das Anzeigefeld 4 oder der Zeiger sich stets in oder auf demjenigen Einzelfeld 2 befindet, in dessen zugehörigem Programmbereich/Programmfunktion der Benutzer sich jeweils befindet.

## Beschreibung

Die Erfindung betrifft eine Statusanzeige in einem Computerprogramm mit einem länglichen Feld, auf dem ein Anzeigefeld oder Zeiger wandert, dessen jeweilige Stellung auf dem länglichen Feld den Status angibt.

Statusanzeigen in Form länglicher Felder sind verschiedentlich bekannt. So sind längliche Anzeigeinstrumente bekannt, bei denen ein Zeiger entlang einer geraden Skala wandert. Ferner ist bekannt, am Rand eines Fensters insbesondere eines Textfensters ein längliches Feld anzuordnen, an dessen beiden Enden ein Knopffeld angeordnet ist, sobei zwischen beiden Knopffeldern ein Anzeigeknopf wandert und verschieblich ist, wodurch im Fenster der Inhalt insbesondere der Text entsprechend verschoben wird. Die Stellung des wandernden Knopfes über das längliche Statusfeld zeigt nur ungefähr an, an welcher Stelle des gesamten Textes sich das Fenster befindet, d.h. es muß geschätzt werden, wieweit der Knopf bewegt werden muß, um eine bestimmte Textstelle zu erreichen.

Aufgabe der Erfindung ist es, eine Statusanzeige zu schaffen, die sehr präzise anzeigt, an welcher Stelle eines Programms oder eines Textes oder eines Informationsbereiches man sich befindet, wobei eine besonders einfache Bedienung gegeben sein soll.

Diese Aufgabe wird erfindungsgemäß dadurch gelöst, daß das längliche Feld aus mehreren aneinander angrenzenden Einzelfeldern zusammengesetzt ist, die jeweils ein Bedienfeld oder einen Bedienknopf bilden, bei dessen Betätigung in den dazugehörigen Programmbereich verzweigt oder die dazugehörige Programmfunktion ausgeführt wird, wobei das Anzeigefeld oder der Zeiger sich stets in oder auf demjenigen Einzelfeld befindet, in dessen zugehörigem Programmbereich/Programmfunktion der Benutzer sich jeweils befindet.

Bei einer solchen Statusanzeige wandert das Anzeigefeld bzw. der Zeiger über die Einzelfelder und zeigt damit sehr genau an, an welcher Stelle des Programms bzw. der Informationsmenge man sich befindet, da die Einzelfelder die einzelnen Programm-, Text- oder Informationsmengenteile bzw. -abschnitte oder -absätze oder -kapitel oder -bereiche darstellen. Es wird somit sehr präzise die jeweilige Stelle des Programms, des Textes oder der Informationsmenge angezeigt. Darüber hinaus bilden die Einzelfelder selber Bedienfelder bzw. Bedienknöpfe, die bei ihrer Betätigung (Anklicken) zu dem jeweiligen Programmbereich bzw. Text- oder Informationsbereich führen. Die Statusanzeige hat damit die doppelte Funktion einer menueähnlichen Bedienung mit einer exakten Darstellung, wo der Anwender bzw. Benutzer im Programm bzw. in der Informationsmenge steht.

Besonders vorteilhaft ist es, daß das Anzeigefeld oder der Zeiger mehrere Stellungen in oder auf dem Einzelfeld einnimmt, je nach dem in welchem Unterbereich des dazugehörigen Programmbereichs der Benutzer sich befindet. Hierdurch kann eine noch feinere Unterteilung der Einzelfelder erfolgen, d.h. das Anzeigefeld bzw. der Zeiger kann an verschiedenen Stellen des Einzelfeldes sich befinden und damit darstellen, in welchem Bereich des zugehörigen Programmbereichs der Benutzer sich befindet.

Besonders vorteilhaft ist es, wenn das Anzeigefeld oder der Zeiger farbig und/oder durchsichtig ist. Auch ist es von besonderem Vorteil, wenn das Anzeigefeld oder der Zeiger in seiner Größe gleich oder kleiner als ein Einzelfeld ist.

Eine sehr präzise Anzeige wird geschaffen, wenn das Anzeigefeld oder der Zeiger in seiner Breite einen Bruchteil der Breite eines Einzelfeldes aufweist, wobei der Bruchteil der Anzahl der Unterbereiche des Programmbereichs entspricht.

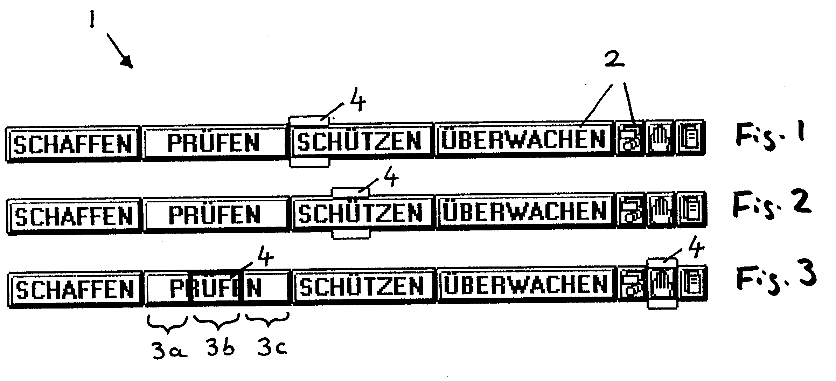

Ausführungsbeispiele der Statusanzeige sind in den Fig. 1 bis 3 dargestellt.

Fig. 1 zeigt eine Statusanzeige in Form eines länglichen Feldes 1, das aus mehreren Einzelfeldern 2 zusammengesetzt ist, wobei die in der Höhe gleich großen und in der Länge unterschiedlich langen Einzelfelder lückenlos mit ihren Seiten aneinandergrenzen. Ein solches längliches Feld 1 ist im Ausführungsbeispiel längs beschriftet, so daß es im Monitorbild waagerecht am oberen oder unteren Rand in der Regel angeordnet ist und während des gesamten Programms stets zu sehen ist. Alternativ oder zusätzlich kann das längliche Feld auch senkrecht am linken und/oder rechten Bildrand angeordnet sein. Ferner können zwei oder mehr längliche Felder waagerecht oder senkrecht parallel nebeneinander angeordnet sein. Jedem Einzelfeld ist ein bestimmter Programmnbereich oder eine bestimmte Programmfunktion zugeordnet, wobei die Einzelfelder entsprechend dem logischen und/oder zeitlichen Ablauf des Programms hintereinander angeordnet sind. Hierbei können wichtige und/oder große Programm- oder Inhaltsbereiche von einem längeren und/oder größeren Einzelfeld dargestellt sein als kleinere oder weniger wichtige Programmbereiche bzw. Programmfunktionen.

Wird eines der Einzelfelder betätigt, insbesondere durch das Anklicken eines Mauszeigers oder durch Antippen mit dem Finger, so führt dieses Betätigen des Einzelfeldes zu einer Funktion, die dem entsprechenden Programmbereich oder der entsprechenden Programmfunktion entspricht, insbesondere wird zu demjenigen Programmbereich geschaltet oder diejenige Programmfunktion ausgeführt. Damit kann diese längliche Statusanzeige ein Menue darstellen, bei dem die Einzelfelder die einzelnen Menuepunkte bzw. Menuethemen bilden.

Entlang der länglichen Statusanzeige und damit dem Feld 1 bewegt sich ein Anzeigefeld oder Zeiger 4 der anzeigt, an welcher Stelle des Programms bzw. in welcher Programmfunktion der Benutzer des Programms sich befindet (dieser Benutzer kann auch eine Maschine, ein Rechner oder ein Programm sein). Im Ausführungsbeispiel nach Fig. 1 wird ein zweiteiliges Anzeigefeld 4 verwendet, das mit einem oberen Bereich am oberen Rand und mit einem unteren Bereich am unteren Rand des länglichen Feldes 1 entlang wandert. Das Anzeigefeld bzw. der Zeiger 4 können stets die gleiche Länge besitzen wie ein Einzelfeld 2, so daß von einem Einzelfeld zum anderen das Anzeigefeld/Zeiger 4 springt, siehe Ausführungsbeispiel nach Fig. 3 rechts außen.

Alternativ kann aber auch das Anzeigefeld/Zeiger 4 eine geringere Länge als ein Einzelfeld 2 haben, so daß die Stellung des Anzeigefeldes/Zeigers innerhalb eines Bereichs eines Einzelfeldes 2 darstellt, an welcher Stelle des Programmbereichs eines Einzelfeldes man sich befindet. Es wird also damit eine noch genauere Anzeige erzeugt. Hierbei kann das Anzeigefeld in Programmbereichen von großer Länge sehr schmal ausgeführt sein, um viele Stellungen innerhalb eines Einzelfeldes 2 darstellen zu können. In diesem Fall bewegt, insbesondere springt das Anzeigefeld/Zeiger in kleinen Schritten über ein Einzelfeld.

In einer anderen Alternative entspricht die unterschiedliche Länge der Einzelfelder den unterschiedlichen Längen der Programmbereiche, so daß sich nicht das Anzeigefeld, insbesondere Einzelfeld in seiner Länge der Länge bzw. Größe des Programmbereichs oder der Programmfunktion anpaßt.

In dem linken Bereich der Ausführungsform nach Fig. 3 ist das Anzeigenfeld/Zeiger 4 nicht zweigeteilt, sondern liegt als insbesondere durchsichtiges Feld auf dem länglichen Feld 1 bzw. den Einzelfeldern 2 auf. Hierbei braucht das Anzeigefeld im linken Bereich der Fig. 3 nicht einen Rahmen besitzen, sondern es stellt sich schon genügend durch seine unterschiedliche Farbe dar. Ferner können die Einzelfelder 2 nicht nur Beschriftungen sondern auch zusätzlich und alternativ Symbole oder Bilder zeigen wie dies in den rechten Bereichen der Figuren dargestellt ist. Auch kann das Anzeigefeld/Zeiger 4 ein Bild oder Symbol bilden, darstellen oder aufweisen.

## Patentansprüche

1. Statusanzeige für ein Computerprogramm mit einem länglichen Feld (1), auf dem ein Anzeigefeld (4) oder Zeiger wandert, dessen jeweilige Stellung auf dem länglichen Feld (1) den Status angibt, **dadurch gekennzeichnet,** daß das längliche Feld (1) aus mehreren aneinander angrenzenden Einzelfeldern (2) zusammengesetzt ist, die jeweils ein Bedienfeld oder einen Bedienknopf bilden, bei dessen Betätigung in den dazugehörigen Programmbereich verzweigt oder die dazugehörige Programmfunktion ausgeführt wird, wobei das Anzeigefeld (4) oder der Zeiger sich stets in oder auf demjenigen Einzelfeld (2) befindet, in dessen zugehörigem Programmbereich/Programmfunktion der Benutzer sich jeweils befindet.

2. Statusanzeige nach Anspruch 1, **dadurch gekennzeichnet,** daß das Anzeigefeld oder der Zeiger (4) mehrere Stellungen in oder auf dem Einzelfeld (2) einnimmt, je nach dem in welchem Unterbereich des dazugehörigen Programmbereichs/Programmfunktion der Benutzer sich befindet.

3. Statusanzeige nach Anspruch 1 oder 2, **dadurch gekennzeichnet,** daß das Anzeigefeld oder der Zeiger (4) farbig und/oder durchsichtig ist.

4. Statusanzeige nach einem der vorherigen Ansprüche, **dadurch gekennzeichnet,** daß das Anzeigefeld oder der Zeiger (4) in seiner Größe gleich oder kleiner als ein Einzelfeld (2) ist.

5. Statusanzeige nach einem der vorherigen Ansprüche, **dadurch gekennzeichnet,** daß das Anzeigefeld oder der Zeiger (4) in seiner Breite (B) einen Bruchteil (1/a) der Breite eines Einzelfeldes aufweist, wobei der Bruchteil (1/a) der Anzahl (a) der Unterbereiche des Programmbereichs/Programmfunktion entspricht.

6. Statusanzeige nach einem der vorherigen Ansprüche, **dadurch gekennzeichnet,** daß das längliche Feld (1) waagerecht und/oder senkrecht angeordnet ist.

7. Statusanzeige nach einem der vorherigen Ansprüche, **dadurch gekennzeichnet,** daß zwei oder mehr längliche Felder (1) parallel nacheinander oder übereinander angeordnet sind.
